# EUROPEAN PATENT APPLICATION

(11) **EP 4 629 607 A1**
(43) Date of publication of application: **08.10.2025**
(21) Application number: 23897795.3
(22) Date of filing: 29.11.2023
(51) Int. Cl.: H04N 5/222, H04N 7/18, H04N 23/60

(54) **MULTIPLEXER**

(30) Priority: 30.11.2022 JP 2022191207
(71) Applicant: KOWA COMPANY, LTD., Naka-ku Nagoya-shi Aichi 460-8625 (JP)
(72) Inventor: AZEGAMI Tomohisa, Nagoya-shi Aichi 460-0003 (JP); NAMIKI Kenichi, Nagoya-shi Aichi 460-0003 (JP); FUKUDA Tomoya, Nagoya-shi Aichi 460-0003 (JP)
(74) Representative: Kronthaler, Schmidt & Coll.
(86) International application number: PCT/JP2023/042644
(87) International publication number: WO 2024/117148

(57) **Abstract**

A Multiplexer of the present invention includes: an input unit (11) to which multiple image signals acquired by respective ones of multiple imaging devices (2) are input, the multiple image signals being based on a first data communication standard; an output unit (14) that outputs a signal based on a second data communication standard having a data transfer rate lower than that of the first data communication standard; an image processing unit (16) that performs image processing on multiple images composed of the multiple image signals input to the input unit (11), the multiple image signals being based on the first data communication standard; a first storage unit (12) that temporarily buffers the image signals of the multiple processed images subjected to the image processing in the image processing unit (16); and a conversion processing unit (13) that converts the image signals buffered in the first storage unit (12) to the signal based on the second data communication standard. According to such a multiplexer, the image data acquired by multiple imaging devices adopting a certain data communication standard can be converted into another data communication standard and output without causing data transfer delays or data loss.

## Description

### Technical Field

The present invention relates to a multiplexer that outputs multiple signal inputs as a single signal.

### Background Art

Conventionally, when image data captured by an imaging device such as an industrial digital camera is transmitted to a terminal device (e.g., a general-purpose personal computer, a dedicated processing terminal, etc.) for image processing or image display at manufacturing sites for industrial products such as semiconductors, research institutes, universities, hospitals, etc., a mechanism called a multiplexer is used which combines image data captured by multiple imaging devices into one or selects one of the image data items and outputs it. For example, Patent Document 1 discloses a multiplexer that combines data received from a first camera and data received from a second camera and transmits the combined data to an external device.

Meanwhile, as disclosed in Non-Patent Document 1, various data communication standards have been established for imaging devices such as industrial digital cameras, and the characteristics and device configurations of imaging devices differ depending on the data communication standard adopted. For example, industrial digital cameras conforming to the data communication standard "GigE Vision" are required to have a frame buffer on the data transmission side according to that standard, and the power supply circuit is large because the power supply inside the camera is generated from a 48V superimposed power supply via a transformer, resulting in an increased amount of heat generation of the device, so the housing has to be of a certain size, but since such industrial digital cameras can be directly connected to a terminal device such as a personal computer via a LAN cable, they have a feature of being easy to use. On the other hand, industrial digital cameras conforming to "CoaXPress," another data communication standard, have a small power supply circuit because the power supply inside the camera is generated from a 24V superimposed power supply that does not go through a transformer, and furthermore do not need to be equipped with a frame buffer, so the housing can be made smaller than those of industrial digital cameras that adopt the "GigE Vision" standard. Thus, the industrial digital cameras conforming to "CoaXPress" have an advantage that they can be used even when the installation environment of the cameras is restricted, but they have a negative feature that a grabber board is required on the image data receiving side in order to process the image data on the terminal device.

In systems in which image data captured by an imaging device such as an industrial digital camera is sent to a terminal device such as a personal computer for image processing and image display, imaging devices conforming to the "GigE Vision" standard are often adopted, taking into consideration the feature that they can be directly connected to the terminal device.

On the other hand, when the installation space for the imaging device is restricted, there is a need to adopt an imaging device with a small housing, for example, an industrial digital camera conforming to the "CoaXPress" standard. In order to receive image data by the terminal device when an imaging device conforming to the "CoaXPress" standard is adopted as above, a conceivable method is to separately prepare a grabber board for "CoaXPress" or convert the image data to match another medium possessed by the host side device, such as "GigE Vision," but the method of separately preparing a grabber board for "CoaXPress" has a problem in an increased cost, while the method of using a conversion device has a problem in that, in a system using multiple imaging devices, preparing a unit for the conversion for each of the imaging devices results in a large cost increase.

One solution to such problems is to send image data acquired by multiple imaging devices that use a certain data communication standard to the user's terminal device via a multiplexer that can combine and convert the image data into a different data communication standard.

### Prior Art Documents

### Patent Documents

Patent Document 1: WO2017/183706

### Non-Patent Documents

Non-Patent Document 1: "Standard specifications for machine vision interfaces" (issued January 2014, Japan Industrial Imaging Association, http://jiia.org/wp-content/themes/jiia/pdf/fsf.pdf)

### Summary of the Invention

### Problems to be solved by the Invention

In the meantime, the data transfer rates determined in the data communication standards are different. For example, when the data communication standard for imaging devices is "CoaXPress," the data transfer rate is standardized to 1.25 Gbps (effective transfer rate is about 1 Gbps) even in a case of transferring the image data at the lowest rate. On the other hand, in the "GigE Vision" standard, the maximum data transfer rate is at most 1 Gbps (effective transfer rate is about 900 Mbps), so there is a problem in that when performing interface conversion for the image data from the "CoaXPress" to the "GigE Vision," the communication band will lack. Understandably, when a multiplexer is used to combine the image data transmitted from multiple imaging devices and the combined data is converted into data conforming to a different data communication standard and transmitted to a single terminal device, the lack of communication band will be more significant. In the first place, when a multiplexer is used to perform processing of combining image data transmitted from multiple imaging devices, it becomes necessary to store the image data in a buffer memory via a memory controller, but since the bandwidth of this memory controller is limited, it will be difficult to even store all of the image data in the buffer memory, resulting in a problem of data loss.

The present invention has been made in consideration of the above problems, and an object of the present invention is to provide a multiplexer that can convert image data acquired by multiple imaging devices adopting a certain data communication standard into another data communication standard and output it without causing data transfer delays or data loss.

### Means for solving the Problems

To achieve the above object, the present invention provides a multiplexer comprising: an input unit to which multiple image signals acquired by respective ones of multiple imaging devices are input, the multiple image signals being based on a first data communication standard; an output unit that outputs a signal based on a second data communication standard having a data transfer rate lower than that of the first data communication standard; an image processing unit that performs image processing on multiple images composed of the multiple image signals input to the input unit, the multiple image signals being based on the first data communication standard; a first storage unit that temporarily buffers the image signals of the multiple processed images subjected to the image processing in the image processing unit; and a conversion processing unit that converts the image signals buffered in the first storage unit to the signal based on the second data communication standard (Claim 1).

According to the invention (Claim 1), in a system using multiple imaging devices adopting the first data communication standard, when converting into the second data communication standard having a data transfer rate lower than that of the first data communication standard, the image data from the multiple imaging devices can be subjected to interface conversion with a single unit without preparing a unit for the conversion for each of the imaging devices. Moreover, even when the data transfer rate of the first data communication standard is higher than the data transfer rate of the second data communication standard, the input image data can be temporarily stored in the first storage unit, and it is therefore possible to avoid the overflow due to the lack of bandwidth on the output side. Furthermore, by temporarily storing the data in the first storage unit as image data processed by the image processing unit, rather than the image data itself input from the input unit, the amount of data transferred to the first storage unit can be suppressed, and the loss of data to be stored in the first storage unit can be prevented. Thus, a multiplexer is realized that can combine and convert image data acquired by multiple imaging devices adopting the first data communication standard into the second data communication standard and output it without causing data transfer delays or data loss.

In the above invention (Claim 1), the first data communication standard may be CoaXPress, and the second data communication standard may be GigE Vision (Invention 2).

According to the invention (Claim 2), the image data inputs from multiple imaging devices conforming to the "CoaXPress" standard can be received, and the data to be transmitted to a terminal device for image processing can be output in the "GigE Vision" standard; therefore, it is possible to construct an imaging system with a high degree of freedom in the installation location of the imaging devices and a simple device configuration.

In the above invention (Claims 1, 2), the image processing unit may set respective regions of interest for the multiple images and adopt images corresponding to the set respect regions of interest as the processed images (Claim 3).

In the above invention (Claim 3), captured images acquired by the multiple imaging devices may include an observation target line formed by reflected light of linear irradiation light that irradiates an object to be imaged, and the image processing unit may set the regions of interest to a parallelogram shape so that the observation target line is included in the regions of interest (Claim 4).

In the above invention (Claim 4), the conversion processing unit may calculate numerical data relating to the observation target line from the image signals buffered in the first storage unit (Claim 5).

In the above invention (Claim 5), a second storage unit that temporarily buffers the numerical data may be further included (Claim 6).

### Advantageous Effect of the Invention

According to the multiplexer of the present invention, image data acquired by multiple imaging devices adopting a certain data communication standard can be converted into another data communication standard and output without causing data transfer delays or data loss.

### Brief Description of the Drawings

[FIG. 1] FIG. 1 is a schematic configuration diagram of an imaging system including a multiplexer according to an embodiment of the present invention.
[FIG. 2] FIG. 2 is a schematic configuration diagram of the multiplexer according to the embodiment.
[FIG. 3] FIG. 3 is a set of schematic diagrams for describing the content of image data processing in the multiplexer.

### Embodiments for Carrying out the Invention

Hereinafter, one or more embodiments of the present invention will be described in detail with reference to the drawings. The embodiments described below are exemplified, and the present invention is not limited to these embodiments.

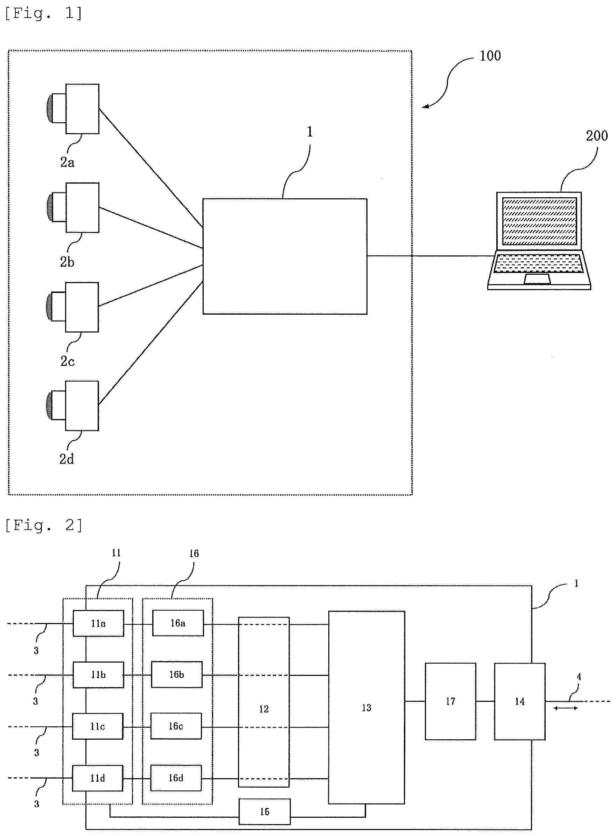

FIG. 1 is a schematic configuration diagram of an imaging system 100 including a multiplexer 1 according to an embodiment of the present invention. The imaging system 100 is configured such that multiple imaging devices 2 are connected to an input unit 11 of the multiplexer 1 via cables. In the present embodiment, four imaging devices 2 (2a, 2b, 2c, and 2d) are connected to the multiplexer 1. Specifically, the input unit 11 of the multiplexer 1 is composed of four input units: a first input unit 11a, a second input unit 11b, a third input unit 11c, and a fourth input unit 11d, and the four imaging devices 2a, 2b, 2c, and 2d are connected to the first input unit 11a, the second input unit 11b, the third input unit 11c, and the fourth input unit 11d, respectively. A terminal device 200 is connected to an output unit 14 of the multiplexer 1, and the imaging system 100 is thereby configured such that the image data acquired by the imaging devices 2, numerical data based on the image data, etc. can be transferred to the terminal device 200. The number of the imaging devices 2 connected to the multiplexer 1 is not particularly limited, provided that the number is plural, and the number of input units 11 provided in the multiplexer 1 is also not particularly limited, provided that the number is plural. It is permissible that the number of the imaging devices 2 connected to the multiplexer 1 is smaller than the number of the input units 11 provided in the multiplexer 1 (i.e., the input units 11 may include one or more input units to which the imaging devices 2 are not connected).

In the present embodiment, each imaging device 2 is an industrial digital camera conforming to the "CoaXPress" standard, and the four imaging devices 2 (2a, 2b, 2c, and 2d) are connected to the first input unit 11a, second input unit 11b, third input unit 11c, and fourth input unit 11d of the multiplexer 1, respectively, using general-purpose coaxial cables. Lighting devices (not illustrated) that illuminate respective imaging targets are connected to the four imaging devices 2 (2a, 2b, 2c, and 2d), and lighting control signals for controlling on/off of the lighting are transmitted from the terminal device 200 to the lighting devices through the multiplexer 1 and the imaging devices 2.

The terminal device 200 performs various processes, such as image processing and image display, based on the image data and numerical data transmitted from the imaging system 100 and also outputs to the imaging system 100 the control signals for controlling the imaging devices 2 and lighting devices constituting the imaging system 100. The terminal device 200 may be, for example, a general-purpose personal computer, or may also be an operating terminal dedicated to the imaging system 100. The terminal device 200 is configured to be able to receive the image data and numerical data which are output in accordance with the "GigE Vision" standard, and is connected to the output unit 14 of the multiplexer 1 via a general-purpose LAN cable. An operator of the imaging system 100 can operate the terminal device 200 thereby to issue various instructions to the imaging system 100.

As illustrated in FIG. 2, the multiplexer 1 according to the present embodiment includes: the input unit 11 to which multiple image signals based on a first data communication standard acquired by respective imaging devices are input; the output unit 14 that outputs a signal based on a second data communication standard having a data transfer rate lower than that of the first data communication standard; an image processing unit 16 (16a, 16b, 16c, 16d) that performs image processing on multiple images composed of the multiple image signals based on the first data communication standard input to the input unit 11; a first storage unit 12 that temporarily buffers the image signals of the multiple processed images subjected to the image processing in the image processing unit 16; a conversion processing unit 13 that converts the image signals buffered in the first storage unit 12 into signals based on the second data communication standard; a second storage unit 17 that temporarily buffers the signals based on the second data communication standard generated by the conversion processing unit 13; and a power supply unit 15 that supplies power to the four imaging devices 2 (2a, 2b, 2c, and 2d) connected to the multiplexer 1. In the present embodiment, the first data communication standard is the "CoaXPress" standard, and the second data communication standard is the "GigE Vision" standard.

The input unit 11 is composed of four input units: the first input unit 11a, the second input unit 11b, the third input unit 11c, and the fourth input unit 11d which are assigned to the four imaging devices 2 (2a, 2b, 2c, and 2d), respectively. The first input unit 11a, the second input unit 11b, the third input unit 11c, and the fourth input unit 11d each have an interface structure (connector) adopted by the "CoaXPress" standard, and the four imaging devices 2 (2a, 2b, 2c, and 2d) are connected thereto via coaxial cables.

The first storage unit 12 is a memory device, so-called a frame memory, for storing the image data of one screen which is input from the input unit 11, and may be implemented as DRAM or SRAM. In the present embodiment, the image processing unit 16 (16a, 16b, 16c, 16d), which will be described below, performs image processing on the multiple image data items input from the first input unit 11a, second input unit 11b, third input unit 11c, and fourth input unit 11d, and the first storage unit 12 independently stores the image data of the multiple processed images subjected to the image processing and independently outputs the image data to the conversion processing unit 13, which will be described later.

The image processing unit 16 (16a, 16b, 16c, 16d) is one or more processors for performing image processing on the input image data, and may be implemented as FPGA, CPU, etc. In the present embodiment, the image processing unit 16a performs image processing on the image data input from the first input unit 11a, the image processing unit 16b performs image processing on the image data input from the first input unit 11b, the image processing unit 16c performs image processing on the image data input from the first input unit 11a, and the image processing unit 16d performs image processing on the image data input from the first input unit 11a. The image processing units 16a, 16b, 16c, and 16d do not need to be independent processors, and the conversion processing unit 13, which will be described later, may function as the image processing units 16a, 16b, 16c, and 16d.

Here, the image processing performed by the image processing unit 16 (16a, 16b, 16c, 16d) is required to be processing for compressing the amount of data of the multiple image data items input from the first input unit 11a, second input unit 11b, third input unit 11c, and fourth input unit 11d. For example, possible examples of the image processing performed by the image processing unit 16 (16a, 16b, 16c, 16d) include setting a region of interest for each of the multiple images input from the input units and generating an image corresponding to the set region of interest (an image in which only the region of interest is cut out) as a processed image, performing processing such as image binarization, edge enhancement, and inverted image generation, and digitalization of feature amounts. Note that digitalization of feature amounts includes using a numerical value obtained by measuring the angle of an object in the image or a numerical value obtained by measuring the dimensions.

The conversion processing unit 13 is a processor for performing a conversion process/combining process on the image data and control of the imaging devices 2 and may be implemented as an FPGA, a CPU, or the like. The conversion processing unit 13 provides, for example, various processes for the image signals input from the imaging devices 2 (and various signals generated based on the image signals) and functions such as transmission and reception of control signals to and from the imaging devices 2, control of the power supply to the imaging devices 2, and on/off control for the lighting devices. In the present embodiment, the conversion processing unit 13 can convert multiple image data items based on the "CoaXPress" standard input to the input unit 11 into image data based on the "GigE Vision" standard. Moreover, the conversion processing unit 13 can combine two or more image data items of the image data (including processed image data subjected to the image processing by the image processing unit 16a, 16b, 16c, 16d), which is input from the first input unit 11a, second input unit 11b, third input unit 11c, and fourth input unit 11d, to generate combined image data. Furthermore, the conversion processing unit 13 can calculate numerical data from the image data based on a processing program, for example, calculate some numerical data related to a specific object included in the image, and store the calculated numerical data in the second storage unit 17, which will be described below. In addition, the conversion processing unit 13 can transmit control signals for giving imaging instructions or the like to the imaging devices 2 based on the control signals received from the terminal device 200.

The second storage unit 17 is a memory device for temporarily buffering the image data and numerical data input from the conversion processing unit 13, and may be implemented as DRAM or SRAM.

The output unit 14 outputs the image data and numerical data converted to the "GigE Vision" standard by the conversion processing unit 13 (or such data temporarily buffered in the second storage unit 17) to the outside of the multiplexer 1. The output unit 14 has an interface structure (connector) adopted by the "GigE Vision" standard and is connected to the terminal device 200 via a LAN cable.

The power supply unit 15 is a power supply circuit that outputs power to be supplied to the imaging devices 2 (2a, 2b, 2c, and 2d).

The conversion processing unit 13 of the multiplexer 1 can receive the control signal, which is transmitted from the terminal device 200 by the operator operating the terminal device 200, via the output unit 14 and transmit, based on the received control signal, a control signal to each imaging device 2 so that the imaging devices 2 (2a, 2b, 2c, and 2d) achieve the following functions:
(1) a function of controlling any one imaging device 2 of the four imaging devices 2 (2a, 2b, 2c, and 2d) to capture an image;
(2) a function of controlling any two or more imaging devices 2 of the four imaging devices 2 (2a, 2b, 2c, and 2d) to capture images at the same time; and
(3) a function of switching the imaging device or devices 2 which capture an image or images.

According to the multiplexer 1 as described above, in the system using the four imaging devices 2 adopting the "CoaXPress" standard (first data communication standard), when converting into the "GigE Vision" standard (second data communication standard) having a data transfer rate lower than that of the "CoaXPress" standard, the image data from the four imaging devices 2 can be subjected to the interface conversion with a single unit without preparing a unit for the conversion for each of the four imaging devices 2. Moreover, even when the data transfer rate of the "CoaXPress" standard is higher than the data transfer rate of the "GigE Vision" standard, the input image data can be temporarily stored in the first storage unit 12, and it is therefore possible to avoid the overflow due to the lack of bandwidth on the output side. Furthermore, by temporarily storing the data in the first storage unit 12 as image data processed by the image processing unit 16 (16a, 16b, 16c, 16d), rather than the image data itself input from the input unit 11 (first input unit 11a, second input unit 11b, third input unit 11c, fourth input unit 11d), the amount of data transferred to the first storage unit 12 can be suppressed, and the loss of data to be stored in the first storage unit 12 can be prevented. Thus, the image data acquired by the four imaging devices 2 conforming to the "CoaXPress" standard can be combined and converted into the "GigE Vision" standard without causing data transfer delays or data loss.

Moreover, by making use of such a multiplexer 1, the image data inputs from the multiple imaging devices 2 conforming to the "CoaXPress" standard can be received, and the data to be transmitted to the terminal device 200 can be output in the "GigE Vision" standard; therefore, it is possible to construct the imaging system 100 with a high degree of freedom in the installation location of the imaging devices 2 and a simple device configuration.

In the present embodiment, the image processing unit 16 (16a, 16b, 16c, 16d) sets respective regions of interest for the multiple images input from the first input unit 11a, second input unit 11b, third input unit 11c, and fourth input unit 11d, and generates images corresponding to the set respect regions of interest (images in which only the regions of interest are cut out) as the processed images. The imaging system 100 using industrial digital cameras as the imaging devices 2 may be used for the purpose of irradiating an object to be imaged with linear irradiation light, imaging an observation target line formed by the reflected light of the linear irradiation light, and analyzing changes in the observation target line. Specifically, the imaging system 100 is used, for example, to measure the angle or orientation of a specific portion of the object to be imaged, or to confirm the linearity of the object to be imaged.

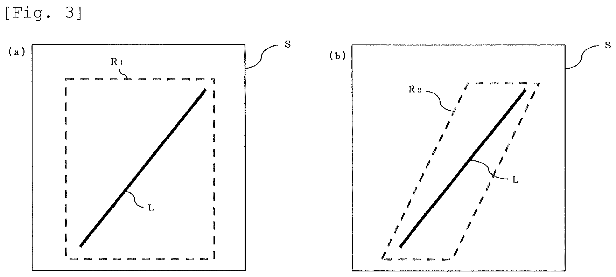

For example, as illustrated in FIG. 3(a), when a captured image S includes an observation target line L formed by the reflected light of the linear irradiation light which irradiates the object to be imaged, it is possible to preliminarily know where in the captured image S the observation target line L will appear, and therefore it is also possible to set a region of interest R₁ for the region where the observation target line L will appear. For example, the operator of the imaging system 100 operates the terminal device 200 to allow the image processing unit 16 (16a, 16b, 16c, 16d) to set the region of interest R₁ in the image S, and an image corresponding to this region of interest is generated as a processed image. This processed image is an image in which other regions than the region of interest R₁ are discarded, and the image data of the processed image therefore has an amount of data that is more compressed than the image data input from the input unit 11.

Furthermore, as illustrated in FIG. 3(b), if a region of interest R₂ that includes the observation target line L appearing in the captured image S is set to a parallelogram shape, the amount of data of the image (processed image) corresponding to the region of interest generated by the image processing unit 16 (16a, 16b, 16c, 16d) can be made smaller than that of the image corresponding to the rectangular region of interest as illustrated in FIG. 3(a). Thus, the image processing unit 16 (16a, 16b, 16c, 16d) can set the region of interest R₂ to a parallelogram shape so that the observation target line L is included in the region of interest R₂, thereby reducing the amount of data transferred to the first storage unit 12, and it is possible to prevent the occurrence of data transfer delays and data loss in the multiplexer 1. The setting of the region of interest R₂, for example, the size and inclination angle of the parallelogram, etc., can be adjusted by the operator of the imaging system 100 operating the terminal device 200.

Furthermore, when the imaging system 100 is used for the purpose of irradiating an object to be imaged with linear irradiation light, imaging an observation target line formed by the reflected light of the linear irradiation light, and analyzing changes in the observation target line, it is possible to reduce the amount of data output from the output unit 14 by transferring the data to the terminal device 200 as numerical data related to the observation target line, rather than the image data itself.

In the present embodiment, the conversion processing unit 13 is configured to be able to calculate numerical data related to the observation target line from the image signals buffered in the first storage unit 12. Specifically, on the basis of the image signals buffered in the first storage unit 12, the conversion processing unit 13 calculates numerical data of an angle formed by the observation target line with respect to a certain reference line, and transfers the angle data to the second storage unit 17. Thus, by outputting numerical data from the output unit 14 rather than image data, it is possible to prevent delays in data transfer from the multiplexer 1 to the terminal device 200, and also to reduce the amount of processing performed on the terminal device 200 side.

While the multiplexer 1 and the imaging system 100 using the multiplexer 1 according to the present invention have been heretofore described, the present invention is not limited to the above embodiments, and various modifications can be carried out. For example, in the present embodiment, the first data communication standard is the "CoaXPress" standard and the second data communication standard is the "GigE Vision" standard, but the data communication standards are not necessarily limited to them, and provided that the data transfer rate of the second data communication standard is lower than that of the first data communication standard, the same effects as those of the multiplexer 1 according to the present embodiment can be expected by using a multiplexer having the same configuration. In addition, the above description is made on the assumption that the four imaging devices 2 (2a, 2b, 2c, and 2d) are connected to the multiplexer 1, but the number of imaging devices 2 connected to the multiplexer 1 is not limited to this as a matter of course, and similar processing is possible, provided that multiple imaging devices 2 are connected.

### Description of Reference Numerals

- 100: Imaging system
- 1: Multiplexer
11 Input unit
11a First input unit
11b Second input unit
11c Third input unit
11d Fourth input unit
12 First storage unit
13 Conversion processing unit
14 Output unit
15 Power supply unit
16 (16a, 16b, 16c, 16d) Image processing unit
17 Second storage unit
- 2: Imaging device
2a First imaging device
2b Second imaging device
2c Third imaging device
2d Fourth imaging device
- 3: Coaxial cable
- 4: LAN cable
- 200: Terminal device

## Claims

1. A multiplexer comprising:
an input unit to which multiple image signals acquired by respective ones of multiple imaging devices are input, the multiple image signals being based on a first data communication standard;
an output unit that outputs a signal based on a second data communication standard having a data transfer rate lower than that of the first data communication standard;
an image processing unit that performs image processing on multiple images composed of the multiple image signals input to the input unit, the multiple image signals being based on the first data communication standard;
a first storage unit that temporarily buffers the image signals of the multiple processed images subjected to the image processing in the image processing unit; and
a conversion processing unit that converts the image signals buffered in the first storage unit to the signal based on the second data communication standard.

2. The multiplexer according to claim 1, wherein
the first data communication standard is CoaXPress, and
the second data communication standard is GigE Vision.

3. The multiplexer according to claim 1 or 2, wherein the image processing unit sets respective regions of interest for the multiple images and adopts images corresponding to the set respect regions of interest as the processed images.

4. The multiplexer according to claim 3, wherein
captured images acquired by the multiple imaging devices include an observation target line formed by reflected light of linear irradiation light that irradiates an object to be imaged, and
the image processing unit sets the regions of interest to a parallelogram shape so that the observation target line is included in the regions of interest.

5. The multiplexer according to claim 4, wherein the conversion processing unit calculates numerical data relating to the observation target line from the image signals buffered in the first storage unit.

6. The multiplexer according to claim 5, further comprising
a second storage unit that temporarily buffers the numerical data.
